# EUROPÄISCHE PATENTSCHRIFT

(11) **EP 2 415 600 B1**
(45) Veröffentlichungstag und Bekanntmachung des Hinweises auf die Patenterteilung: **11.09.2013**
(21) Anmeldenummer: 11173388.7
(22) Anmeldetag: 11.07.2011
(51) Int. Cl.: B32B 37/18, B32B 37/14, B32B 37/08

(54) **Kompaktes Laminiergerät**
Compact laminator
Appareil de laminage compact

(30) Priorität: 04.08.2010 DE 102010033422
(43) Veröffentlichungstag der Anmeldung: 08.02.2012
(73) Patentinhaber: Esselte Leitz GmbH & Co. KG, 70469 Stuttgart (DE)
(72) Erfinder: Schneider, Thomas, 71229 Leonberg (DE); Wagenknecht, Sigmar, 70376 Stuttgart (DE); Leute, Kurt, 78176 Blumberg (DE); Schneider, Ulrich, 70563 Stuttgart (DE)
(74) Vertreter: Reule, Hanspeter

(56) Entgegenhaltungen:
- EP-A2- 1 916 099
- EP-B1- 1 690 684
- WO-A1-03/006351
- WO-A2-2006/074325
- US-A1- 2003 209 331
- US-A1- 2003 234 082
- US-B2- 7 022 203
- DATABASE WPI Week 200606 Thomson Scientific, London, GB; AN 2006-050086 XP002663051, -& JP 2005 343133 A (ASKA CORP) 15. Dezember 2005 (2005-12-15)

## Beschreibung

Die Erfindung betrifft ein Laminiergerät gemäß Oberbegriff des Anspruchs 1.

Laminiergeräte dienen der Verbindung von Laminiergut, das in der Regel aus Papier und Kunststofffolie besteht, zu einem Laminat, bei dem das Papier in der Kunststofffolie aufgenommen und dicht verschweißt ist. Sie weisen eine Laminiervorrichtung mit beheizten Laminierwalzen auf, von denen mindestens eine motorisch angetrieben wird. Die Laminiervorrichtung ist in einem Gehäuse aufgenommen, das einen Einführschlitz für das Laminiergut und einen Auswurfschlitz für das Laminat aufweist. Zwischen dem Einführschlitz und dem Auswurfschlitz erstreckt sich ein Durchlaufkanal, den das Laminiergut bis zu den Laminierwalzen und das Laminat von den Laminierwalzen aus durchläuft. Beim Durchführen durch die Laminierwalzen wird das Laminiergut zum Laminat verschweißt. Durch den Einführschlitz kann neben dem Laminiergut allerdings auch Schmutz eindringen, der zum einen die Laminiervorrichtung verschmutzen und zu technischen Defekten führen kann. Zum anderen kann durch den Einführschlitz eingedrungener Schmutz vom Laminiergut mitgenommen und beim Laminieren zwischen den Laminierwalzen mit dem Laminiergut verschweißt werden. Ein solchermaßen verschmutztes Laminat ist unansehnlich.

Die JP 2005-343133 A offenbart ein Laminiergerät mit einer Frontklappe und einer Rückklappe, welche Klappen verschwenkbar sind. Die Klappen sind im geschlossenen Zustand durch einen Steg des Gehäuses voneinander getrennt.

Es ist daher Aufgabe der Erfindung, ein Laminiergerät der eingangs genannten Art derart weiterzubilden, dass Verschmutzungen des Laminats besser vermieden werden können.

Die Aufgabe wird erfindungsgemäß durch ein Laminiergerät mit den Merkmalen des Anspruchs 1 gelöst. Vorteilhafte Merkmale sind Gegenstand der abhängigen Ansprüche.

Der Erfindung liegt der Gedanke zugrunde, dass der Einführschlitz mittels der Frontklappe auf einfache Weise verschlossen und freigegeben werden kann. Insbesondere dann, wenn das Laminiergerät nicht benutzt wird, kann die Frontklappe wie ein Deckel geschlossen werden, so dass das Eindringen von Schmutz durch den Einführschlitz zumindest erschwert wird.

Gemäß einer vorteilhaften Weiterbildung weist die Frontklappe eine Auflagefläche für das Laminiergut auf, die sich in der Verlängerung des Durchlaufkanals befindet. Die Frontklappe dient dann nicht nur dem Verschluss des Einführschlitzes, sondern auch als Einführhilfe für das Laminiergut. Wenn das Laminiergut vor dem Einführen in den Einführschlitz bereits in eine Position gebracht wird, in der es sich in Richtung des Durchlaufkanals erstreckt, wird zudem das Risiko einer Fehlfunktion aufgrund falscher Handhabung verringert. Insbesondere wird bevorzugt, dass die Auflagefläche zumindest abschnittsweise mit einer Bodenfläche des Durchlaufkanals fluchtet, sofern eine solche vorhanden ist. Dadurch wird das Laminiergut in gerader Richtung eingezogen ohne geknickt oder gebogen zu werden.

Zur weiteren Erleichterung des Einzugs des Laminierguts kann das Gehäuse eine weitere, sich vom Einführschlitz aus erstreckende Auflagefläche aufweisen, die mit der Auflagefläche der Frontklappe fluchtet. Die Frontklappe bildet mit ihrer Auflagefläche dann eine Verlängerung der weiteren Auflagefläche. Zweckmäßig ist die Frontklappe an ihrer Auflagefläche mit Vertiefungen als Positionierhilfen für Laminiergut unterschiedlicher normierter Größen versehen. Dabei kommen insbesondere die Standardgrößen für Papier wie DIN A4 bzw. DIN A5 in Betracht. Diese Maßnahme erleichtert die Positionierung des Laminierguts.

Das Gehäuse weist eine Rückklappe auf, die zwischen einer Schließstellung, in der sie den Auswurfschlitz verschließt, und einer Laminierstellung, in der sie den Auswurfschlitz freigibt, verschwenkbar ist. Die Rückklappe kann somit das Eindringen von Schmutz in den Auswurfschlitz verhindern, wenn das Laminiergerät vorübergehend nicht in Betrieb ist. Zudem kann die Rückklappe eine Auflagefläche für das Laminat aufweisen. Dies ist insbesondere deshalb vorteilhaft, weil das Laminat direkt nach dem Austritt aus dem Auswurfschlitz noch warm ist. Fällt das Laminat dann vom Auswurfschlitz in eine undefinierte Position hinunter, kann es in gebogener Stellung liegen bleiben und so erkalten und die gebogene Stellung beibehalten. Dies wird dadurch verhindert, dass das Laminat auf eine Auflagefläche ausgeworfen wird, auf der es in definierter, flacher Position zu liegen kommt. Die Auflagefläche der Rückklappe wird vorteilhaft durch mehrere im Abstand zueinander angeordnete Auflageelemente gebildet. Das noch warme Laminat liegt dann nicht flächig auf der Auflagefläche auf, sondern nur stellenweise und kann dadurch schneller abkühlen.

Die Frontklappe und die Rückklappe liegen in der Schließstellung entlang einer Trennkante aneinander an. Dies verleiht dem Laminiergerät eine kompakte Form und ein ansprechendes Design. Die Frontklappe und die Rückklappe können zudem Verbindungsmittel zum gegenseitigen Verbinden in der Schließstellung aufweisen. Dies können beispielsweise Magnete oder Rastverbindungen sein.

Im Folgenden wird die Erfindung anhand eines in der Zeichnung in schematischer Weise dargestellten Ausführungsbeispiels näher erläutert. Es zeigen
- Fig. 1: eine Laminiergerät mit der Frontklappe und der Rückklappe jeweils in der Laminierstellung; und
- Fig. 2: das Laminiergerät gemäß Fig. 1 mit der Frontklappe und der Rückklappe jeweils in der Schließstellung.

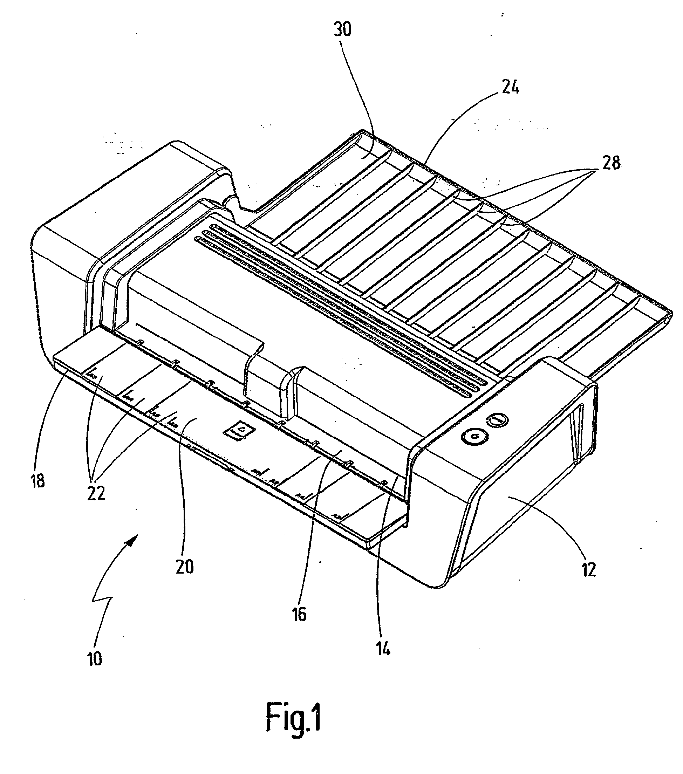

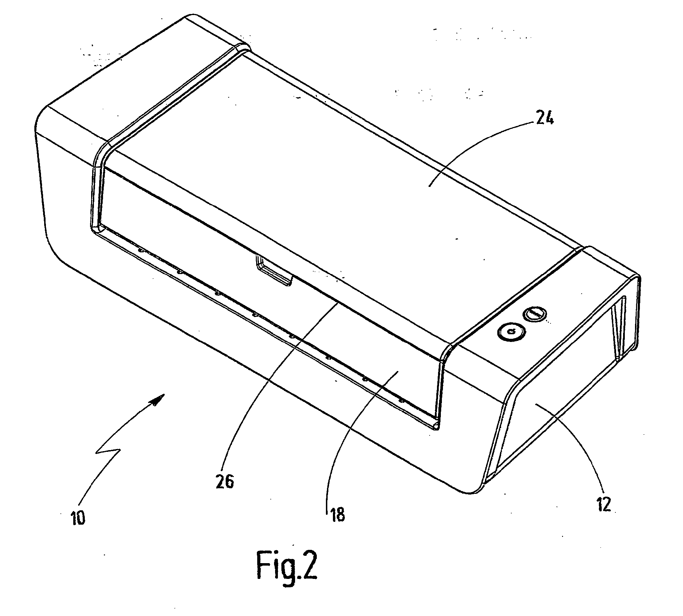

Das in Fig. 1 und Fig. 2 gezeigte Laminiergerät 10 weist ein Gehäuse 12 auf, in dem eine Laminiervorrichtung aufgenommen ist. Die Laminiervorrichtung, die hier nicht im Detail beschrieben werden soll, dient dem Laminieren von Laminiergut, wie Blattgut und Kunststofffolie unter Wärmeeinwirkung zu einem Laminat. Zum Einführen des Laminierguts weist das Gehäuse 12 einen Einführschlitz 14 an einer Vorderseite auf, zum Auswerfen des Laminats ist an der Rückseite ein Auswurfschlitz vorgesehen. Zwischen dem Einführschlitz 14 und dem Auswurfschlitz verläuft ein Durchlaufkanal, den das Laminiergut zu den Heißwalzen der Laminiervorrichtung und das Laminat von den Heißwalzen ausgehend durchläuft.

Vor dem Einführschlitz 14 weist das Gehäuse 12 einen Absatz auf, so dass sich vom Einführschlitz 14 aus eine ebene Fläche 16 erstreckt, die als Einführhilfe zum Einführen des Laminierguts in den Einführschlitz 14 dient. Die ebene Fläche 16 schließt sich unmittelbar an einen unteren Rand des Einführschlitzes 14 an und fluchtet mit diesem. Das Gehäuse 12 weist an der Vorderseite eine Frontklappe 18 auf, die zwischen einer in Fig. 1 gezeigten Laminierstellung und einer in Fig. 2 gezeigten Schließstellung um 90° verschwenkbar ist. In der Laminierstellung (Fig. 1) ist eine Innenfläche der Frontklappe 18 zur ebenen Fläche 16 im wesentlichen fluchtend angeordnet und dient als Auflagefläche 20 für das Laminiergut. Die Auflagefläche 20 wird durch die ebene Fläche 16 noch verlängert, so dass Laminiergut vor dem Laminieren auf sie aufgelegt werden kann. In der Auflagefläche 20 befinden sich Vertiefungen 22, deren Größe auf Standardgrößen des Laminierguts angepasst ist. Sie dienen dem Zentrieren von Laminiergut beispielsweise mit Blattgut der Größe DIN A4 oder DIN A5 vor dem Einführschlitz 14. In der Schließstellung (Fig. 2) verschließt die Frontklappe 18 den Einführschlitz 14.

An der Rückseite weist das Gehäuse 12 eine Rückklappe 24 auf, die zwischen einer in Fig. 1 gezeigten Laminierstellung und einer in Fig. 2 gezeigten Schließstellung um 180° verschwenkbar ist. Befinden sich beide Klappen 18, 24 in der Schließstellung (Fig. 2), so liegen sie entlang einer Trennkante 26 auf Stoß aneinander an. Es sind zudem in beiden Klappen 18, 24 Magnete angeordnet, die sie in der Schließstellung an der jeweils anderen Klappe festhalten. Befinden sich beide Klappen 18, 24 in der Schließstellung, so verleihen sie dem Laminiergerät 10 ein kompaktes, ansprechendes Design.

In der Laminierstellung erstreckt sich die Rückklappe 24 in der Verlängerung des Durchlaufkanals. Sie ist an der in der Laminierstellung nach oben und in der Schließstellung nach innen weisenden Seite mit parallel zueinander verlaufenden Rippen 28 versehen, die zusammen eine Auflagefläche 30 für das aus dem Auswurfschlitz ausgeworfene Laminat bilden.

Zusammenfassend ist folgendes festzuhalten: Die Erfindung betrifft ein Laminiergerät 10 mit einem Gehäuse 12, mit einer im Gehäuse 12 aufgenommenen Laminiervorrichtung zur Laminierung von Laminiergut aus Blattgut und Kunststofffolie zu einem Laminat und mit einem Durchlaufkanal zur Zuführung des Laminierguts zur Laminiervorrichtung und zum Abtransport des Laminats von der Laminiervorrichtung, wobei der Durchlaufkanal an einem Einführschlitz 14 im Gehäuse 12 beginnt und an einem Auswurfschlitz im Gehäuse 12 endet. Erfindungsgemäß ist vorgesehen, dass das Gehäuse 12 eine Frontklappe 18 aufweist, die zwischen einer Schließstellung, in der sie den Einführschlitz 14 verschließt, und einer Laminierstellung, in der sie den Einführschlitz 14 freigibt, verschwenkbar ist.

## Patentansprüche

1. Laminiergerät mit einem Gehäuse (12), mit einer im Gehäuse (12) aufgenommenen Laminiervorrichtung zur Laminierung von Laminiergut aus Blattgut und Kunststofffolie zu einem Laminat und mit einem Durchlaufkanal zur Zuführung des Laminierguts zur Laminiervorrichtung und zum Abtransport des Laminats von der Laminiervorrichtung, wobei der Durchlaufkanal an einem Einführschlitz (14) im Gehäuse (12) beginnt und an einem Auswun`schlitz im Gehäuse (12) endet, wobei das Gehäuse (12) eine Frontklappe (18) aufweist, die zwischen einer Schließstellung, in der sie den Einführschlitz (14) verschließt, und einer Laminierstellung, in der sie den Einführschlitz (14) freigibt, verschwenkbar ist, und wobei das Gehäuse (12) eine Rückklappe (24) aufweist, die zwischen einer Schließstellung, in der sie den Auswurfschlitz verschließt, und einer Laminierstellung, in der sie den Auswurfschlitz freigibt, verschwenkbar ist, **dadurch gekennzeichnet, dass** die Frontklappe (18) und die Rückklappe (24) in der Schließstellung entlang einer Trennkante (26) aneinander anliegen.

2. Laminiergerät nach Anspruch 1, **dadurch gekennzeichnet, dass** die Frontklappe (18) und die Rückklappe (24) in der Schließstellung entlang der Trennkante (26) auf Stoß aneinander anliegen.

3. Laminiergerät nach Anspruch 1 oder 2, **dadurch gekennzeichnet, dass** die Frontklappe (18) und die Rückklappe (24) Verbindungsmittel zum gegenseitigen Verbinden in der Schließstellung aufweisen.

4. Laminiergerät nach einem der vorangehenden Ansprüche, **dadurch gekennzeichnet, dass** die Frontklappe (18) eine Auflagefläche (20) für das Laminiergut aufweist, die sich in der Verlängerung des Durchlaufkanals befindet und vorzugsweise zumindest abschnittsweise mit einer Bodenfläche des Durchlaufkanals fluchtet.

5. Laminiergerät nach Anspruch 4, **dadurch gekennzeichnet, dass** das Gehäuse (12) eine weitere, sich vom Einführschlitz (14) aus erstreckende Auflagefläche (16) aufweist, die mit der Auflagefläche (20) der Frontklappe (18) fluchtet.

6. Laminiergerät nach Anspruch 4 oder 5, **dadurch gekennzeichnet, dass** die Frontklappe (18) an ihrer Auflagefläche (20) mit Vertiefungen (22) als Positionierhilfen für Laminiergut unterschiedlicher normierter Größen versehen ist.

7. Laminiergerät nach einem der vorangehenden Ansprüche, **dadurch gekennzeichnet, dass** die Rückklappe (24) eine Auflagefläche (30) für das Laminat aufweist.

8. Laminiergerät nach Anspruch 7, **dadurch gekennzeichnet, dass** die Auflagefläche (30) der Rückklappe (24) durch mehrere im Abstand zueinander angeordnete Auflageelemente (28) gebildet wird.

## Claims

1. Laminator having a housing (12) and a laminating device incorporated in the housing (12) for laminating items to be laminated consisting of paper sheet material and plastic film into a laminate and having a through-feed channel for feeding the items to be laminated to the laminating device and for conveying the laminate away from the laminating device, wherein the through-feed channel begins at a feeding slot (14) in the housing (12) and ends at a discharge slot in the housing (12), wherein the housing (12) has a front flap (18) which can be pivoted between a closed position, in which it closes the feeding slot (14), and a laminating position, in which it releases the feeding slot (14), and wherein the housing (12) has a rear flap (24) which can be pivoted between a closed position, in which it closes the discharge slot, and a laminating position, in which it releases the discharge slot, **characterised in that** the front flap (18) and the rear flap (24) abut on one another along a separating edge (26) in the closed position.

2. Laminator according to Claim 1, **characterised in that** the front flap (18) and the rear flap (24) abut on one another edge to edge along the separating edge (26) in the closed position.

3. Laminator according to Claim 1 or 2, **characterised in that** the front flap (18) and the rear flap (24) have attaching means for attaching them to each other in the closed position.

4. Laminator according to any one of the preceding claims, **characterised in that** the front flap (18) has a support surface (20) for the items to be laminated, which is located in the extension of the feed-through channel and is preferably at least in sections in alignment with a bottom surface of the feed-through channel.

5. Laminator according to Claim 4, **characterised in that** the housing (12) has a further support surface (16) which extends from the feeding slot (14) and is in alignment with the support surface (20) of the front flap (18).

6. Laminator according to Claim 4 or 5, **characterised in that** the front flap (18) is provided with indentations (22) on its support surface (20) as positioning aids for items to be laminated which have different standardised sizes.

7. Laminator according to any one of the preceding claims, **characterised in that** the rear flap (24) has a support surface (30) for the laminate.

8. Laminator according to Claim 7, **characterised in that** the support surface (30) of the rear flap (24) is formed by a plurality of support elements (28) arranged spaced apart from one another.

## Revendications

1. Appareil de lamination, avec un boîtier (12), avec un dispositif de lamination reçu dans le boîtier (12) et destiné à laminer en un laminé un produit à laminer constitué d'un produit en feuille et d'un film de matière plastique, et avec un canal de passage pour apporter le produit à laminer au dispositif de lamination et pour évacuer le laminé du dispositif de lamination, sachant que le canal de passage débute au niveau d'une fente d'introduction (14) dans le boîtier (12) et se termine au niveau d'une fente d'éjection dans le boîtier (12), sachant que le boîtier (12) présente un volet avant (18) qui peut être pivoté entre une position fermée, dans laquelle il ferme la fente d'introduction (14), et une position de lamination dans laquelle il découvre la fente d'introduction (14), et sachant que le boîtier (12) présente un volet arrière (24) qui peut être pivoté entre une position fermée, dans laquelle il ferme la fente d'éjection, et une position de lamination dans laquelle il découvre la fente d'éjection, **caractérisé en ce que** le volet avant (18) et le volet arrière (24), dans la position fermée, s'appliquent l'un contre l'autre le long d'une arête de séparation (26).

2. Appareil de lamination selon la revendication 1, **caractérisé en ce que** le volet avant (18) et le volet arrière (24), dans la position fermée, s'appliquent l'un contre l'autre en aboutement le long de l'arête de séparation (26).

3. Appareil de lamination selon la revendication 1 ou 2, **caractérisé en ce que** le volet avant (18) et le volet arrière (24) présentent des moyens d'assemblage pour leur assemblage mutuel dans la position fermée.

4. Appareil de lamination selon l'une des revendications précédentes, **caractérisé en ce que** le volet avant (18) présente une surface d'appui (20) pour le produit à laminer, qui se trouve dans le prolongement du canal de passage et qui, de préférence, est au moins sectoriellement en affleurement avec une surface de fond du canal de passage.

5. Appareil de lamination selon la revendication 4, **caractérisé en ce que** le boîtier (12) présente une autre surface d'appui (16), qui s'étend à partir de la fente d'introduction (14) et qui est en affleurement avec la surface d'appui (20) du volet avant (18).

6. Appareil de lamination selon la revendication 4 ou 5, **caractérisé en ce que** le volet avant (18) est pourvu sur sa surface d'appui (20) de renfoncements (22) comme aide au positionnement pour du produit à laminer de différentes tailles normalisées.

7. Appareil de lamination selon l'une des revendications précédentes, **caractérisé en ce que** le volet arrière (24) présente une surface d'appui (30) pour le laminé.

8. Appareil de lamination selon la revendication 7, **caractérisé en ce que** la surface d'appui (30) du volet arrière (24) est formée par plusieurs éléments d'appui (28) disposés à distance les uns des autres.
